# EUROPEAN PATENT SPECIFICATION

(11) **EP 1 711 255 B1**
(45) Date of publication and mention of the grant of the patent: **19.06.2019**
(21) Application number: 05701810.3
(22) Date of filing: 07.01.2005
(51) Int. Cl.: B01J 8/22, B01J 8/18, C10G 2/00, C07C 1/04, F28D 7/16, F28F 9/02, F28F 9/013

(54) **SLURRY BUBBLE COLUMN REACTOR WITH HEAT EXCHANGE SYSTEM**
BLASENSÄULENREAKTOR MIT WÄRMETAUSCHSYSTEM
SYSTEME D'ECHANGE DE CHALEURRÉACTEUR À COLONNE À BULLES POUR SUSPENSION ÉPAISSE AVEC

(30) Priority: 08.01.2004 GB 0400332
(43) Date of publication of application: 18.10.2006
(73) Proprietor: Statoil ASA, 4035 Stavanger (NO); PetroSA, Parow 7500 (ZA)
(72) Inventor: SORAKER, Pal, N-7049 Trondheim (NO); LIAN, Petter, N-7058 Jakobsli (NO); VANKAN, Sander, N-4314 Sandnes (NO)
(74) Representative: Copsey, Timothy Graham
(86) International application number: PCT/GB2005/000040
(87) International publication number: WO 2005/065813

(56) References cited:
- WO-A-99/15484
- DE-A1- 2 711 545
- DE-A1- 2 729 526
- US-A- 4 525 482

## Description

The present invention relates to a slurry bubble column reactor (SBCR)with a heat exchange system and to a method of minimising cross sectional blockage in the SCBR.

Many of the chemical reactions for which SBCRs are used are exothermal, for example, the Fischer-Tropsch synthesis. For this reason, the reactors require a substantial heat removal capacity to maintain isothermal reaction conditions in the reactor. In addition there is an ever present danger of reactor run-away in a Fischer-Tropsch Reactor. To maintain reaction and temperature stability, a low temperature gradient between reaction medium and heat exchanger is required. These two factors, heat exchanging capacity and reaction stability, result in the need for a relatively large internal heat exchange surface area.

The dimensions of a Fischer-Tropsch reactor at a fixed capacity may be limited by the optimal window of operation parameters for the Fischer-Tropsch reaction, such as superficial gas velocities, conversions and catalyst concentrations. In combination with the required large internal heat exchange surface, these parameters can give rise to high densities of reactor internals. These internals could interfere with the slurry flow dynamics in the Fischer-Tropsch reactor, in particular, when large parts of the horizontal reactor cross sectional area are obstructed, restricted or blocked. In these areas, gas velocities will be high and will obstruct the flow of slurry passing through these areas. A local circulation may be formed resulting in catalyst mal-distributions and temperature instabilities.

It is therefore an object of the invention to provide a SBCR with a heat exchange system that minimises the risk of horizontal cross-sectional area restriction.

Vertical tube bundles are commonly used as internal heat exchange surfaces for isothermal reactors. For application in slurry bubble columns, tubular distribution headers at the bottom of the bundle and collector headers at the top are used to allow the reaction gas to pass through. However, the headers still obstruct the flow of gas and of slurry. It is therefore an object of the invention to reduce this obstruction.

In general, at high heat exchanger surface densities, the headers may occupy a substantial part of the reactor horizontal cross sectional area and may lead to resistance to slurry circulation. Other areas that could cause problems are the stiffening areas of the heat exchanger bundle. The vertical heat exchanger tubes require stiffening along the tube length in order to acquire sufficient mechanical strength during transport and erection of the bundle and to withstand turbulence and vibrations during reactor operation.

The present application contemplates different layouts of internal vertical heat exchanger bundles for Fischer-Tropsch slurry bubble column reactors which combine a high heat exchanger surface density but maintain at a limited maximum horizontal cross sectional area restriction. The heat exchanger surface density is expressed by the heat exchange surface area divided by the reactor volume (m²/m³). The horizontal cross sectional area coverage is expressed by the cross sectional area covered by internals divided by the horizontal cross sectional area of the reactor at a certain level in the reactor (m²/m²).

Vertical tube heat exchanger bundles may be described by a number of parameters. These include header diameters, tie-rod diameters and heat exchanger tube diameter, pitch and pitch type. A small heat exchanger tube diameter will be favourable to minimise horizontal cross sectional area coverage but other aspects such as mechanical strength may limit the minimum size of the tube diameter. The heat exchanger tube pitch and the diameter will determine the heat exchanger surface density (m² heat exchanger area /m³ reactor volume) and the cross sectional coverage by the heat exchanger tubes (m² cross section heat exchanger tubes/m² cross section reactor). A higher pitch leads to a lower coverage but also a lower surface density. The heat exchanger header area is a critical area for coverage of reactor horizontal cross sectional area. A minimum diameter is obviously favourable in this respect but other aspects such as mechanical strength and feed water flow may limit the maximum size of the header tubes.

According to the invention, there is provided a slurry bubble column reactor with a heat exchange system, according to claim 1.

By staggering the sub-headers in this way, the horizontal cross sectional coverage at the different vertical positions in the header area is substantially reduced. The staggering is applied both at the top and the bottom of the heat exchanger bundle, thereby keeping heat exchanger tube length constant. The system includes a second header at the other end of the tube bundle, for removing heat exchange fluid from or supplying heat exchange fluid to the tubes, and one or more second sub-headers connected to the second header via distribution conduits, the second sub-headers also being connected to the tubes thereby connecting the second header to the tubes; the second sub-headers being located at at least two different positions in the longitudinal direction of the tubes and being located at at least two different positions in the transverse direction of the tubes.

Preferably, the tubes are connected to each sub-header arranged in a plurality of rows. By increasing the number of heat exchanger tubes per sub-header, the total required number of headers can be reduced and thereby the horizontal cross sectional coverage. An increased number of heat exchanger tubes might require an increased header diameter, however, selecting the right pitch-to-header orientation may in this respect be advantageous. Preferably, the tubes in the bundle are symmetrically distributed with a square, triangular or rotated square pitch formation.

Preferably, the system also includes structural support members arranged to support the heat exchange tubes. Preferably, the support members are arranged in a staggered formation at spaced positions in the longitudinal direction of the tubes. The support members are conveniently tie-rods attached to the tubes. Thus, as with the headers, the tie-rods may also be staggered. The tie-rod area is a critical area for coverage of reactor horizontal cross sectional area. The tie-rod diameter will in most cases be determined by the pitch of the heat exchanger tubes.

Preferably, the tie rods are arranged in a plurality of groups; all the tie rods in each group extend in the same direction; and each group of tie rods is located at a different position in the longitudinal direction of the tubes to the other groups. The tie rods in a group may extend in a direction which is oblique to the direction in which the tie rods in the next adjacent group extend. The tie rods in a group may also extend in the same direction as the tie rods in the next adjacent group but are transversely offset. The selection of the heat exchanger pitch type will influence the number of levels at which tie rods will be required. A triangular pitch will require stiffening in three directions while a square pitch will require two directions.

Preferably, the heat exchange system of the slurry bubble column reactor, comprising a bundle of generally parallel heat exchange tubes for transporting heat exchange fluid in the longitudinal direction of the column, and a series of tube supports at spaced intervals in the longitudinal direction of the tubes, and in which: each tube support comprises a group of tie rods attached to the tubes; the tie rods in each group all extend in the same direction; each group of tie rods is located at a different position in the longitudinal direction of the tubes to the other groups; and the tie rods in a group extend either in a direction in which the tie rods in the next adjacent group extend, or in the same direction as the tie rods in the next adjacent group but are transversely offset.

Preferably, the tie rods in a group all lie in the same traverse plane. Preferably, the groups are arranged in a series of group sets, the group sets being disposed at spaced locations in the longitudinal direction of the tubes.

The invention also extends to a method of minimising cross sectional blockage in a slurry bubble column reactor, the method comprising the steps according to claim 12.

The method can furthermore comprise conducting a chemical reaction which comprises supplying reactants to such a reactor via the inlet and removing a product via the outlet. A suitable reaction would be a Fischer-Tropsch synthesis, and the reactants would comprise CO and H₂. Preferably, the reactor contains a slurry including a product of the reaction in liquid form and a finely divided solid catalyst in suspension. Preferably, the catalyst comprises a supported cobalt catalyst, such as cobalt on a metal oxide carrier. The oxide carrier is preferably alumina but may be silica and/or titania.

Preferably the catalyst particle size range is from 20 to 90 µm, more preferably 40 to 60 µm. Preferably, the catalyst loading is in the range 50 to 400 kg/m³, more preferably 100 to 300 kg/m³. Preferably, the reaction temperature is in the range 190 to 250°C, more preferably 210 to 230°C. Preferably, the reactor pressure is in the range 15 to 30 bar, more preferably 19 to 22 bar.

The H₂:CO ratio is preferably in the range 1.4 to 2.2 and for high selectivity to C₅₊ hydrocarbon products and yields, more preferably about 1.8. Preferably the superficial gas velocity is in the range 5 to 30 cm/s, more preferably 15 to 25 cm/s. Preferably, the slurry liquid medium comprises medium to higher hydrocarbons (C₁₀ to C₇₀).

The invention may be carried into practice in various ways and some embodiments will now be described by way of example with reference to the accompanying drawings in which:
Figure 1 is a schematic vertical cross-section through a slurry bubble column reactor;
Figure 2 is a side view of heat exchanger layout in a slurry bubble column reactor in accordance with the invention;
Figure 3 is a view from beneath of the heat exchanger layout of Figure 2;
Figures 4, 5 and 6 are schematic plan views of three heat exchanger arrangements; and
Figures 7 and 8 are schematic plan views of two tie rod arrangements.

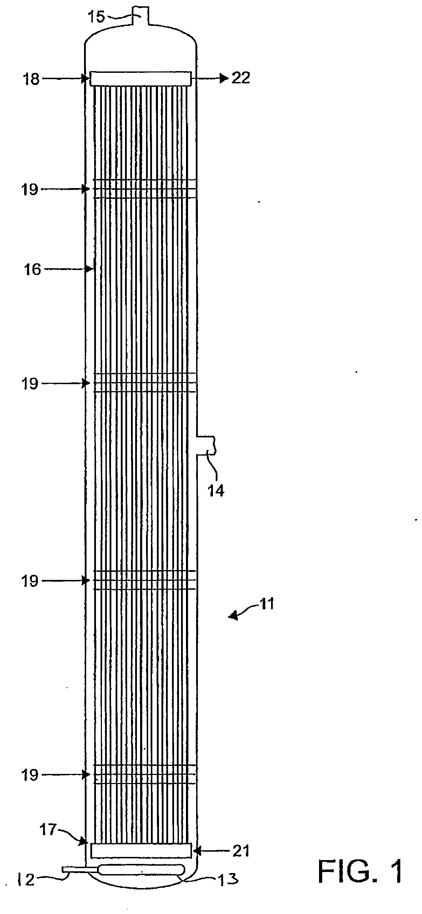

Figure 1 shows a slurry bubble column reactor 11, having a gas inlet 12 leading to a gas distributor shown diagrammatically at 13, a product outlet 14, and a gas outlet 15. The reactor 11 houses a heat exchange system comprising vertically arranged heat exchange tubes 16 a feed water distribution assembly 17, a steam collection assembly 18 and a series of stiffening zones 19 for the tubes 16.

In operation, for example for a Fischer-Tropsch synthesis reaction, the reactor 11 contains a slurry of catalytic particles in a liquid hydrocarbon product. Gaseous reactants are supplied via the inlet 12 and distribution device 13 and the liquid product is withdrawn, either already separated from the catalyst or together with catalyst which must then be removed.

Since the reaction is exothermic, heat is removed by the heat exchange system. Feed water 21 is supplied to the tubes 16 at the bottom and this converts to steam in the tubes 16 as the heat of reaction is absorbed. The steam 22 is collected from the top of the tubes 16.

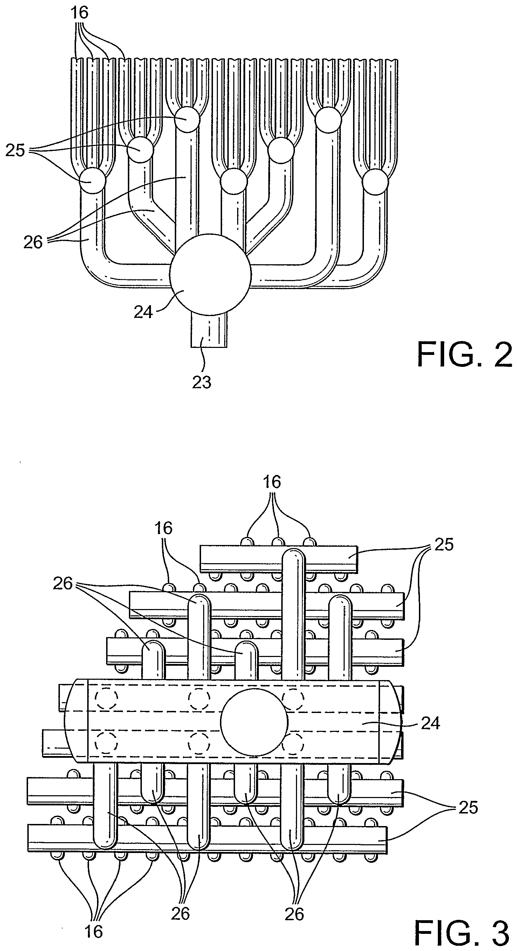

The arrangement of the distribution assembly 17 is shown in Figures 2 and 3, the assembly 17 includes an inlet 23, a main header 24 and a series of sub-headers 25. The sub-headers 25 are connected to the main header 24 by distribution conduits 26 and the tubes 16 are connected to the sub-headers 25.

Significantly, the sub-headers 25 are spaced from each other both laterally and vertically, that is to say they are staggered. In this way, the distribution assembly offers less obstruction to the upward flow of gas and the circulation of the slurry.

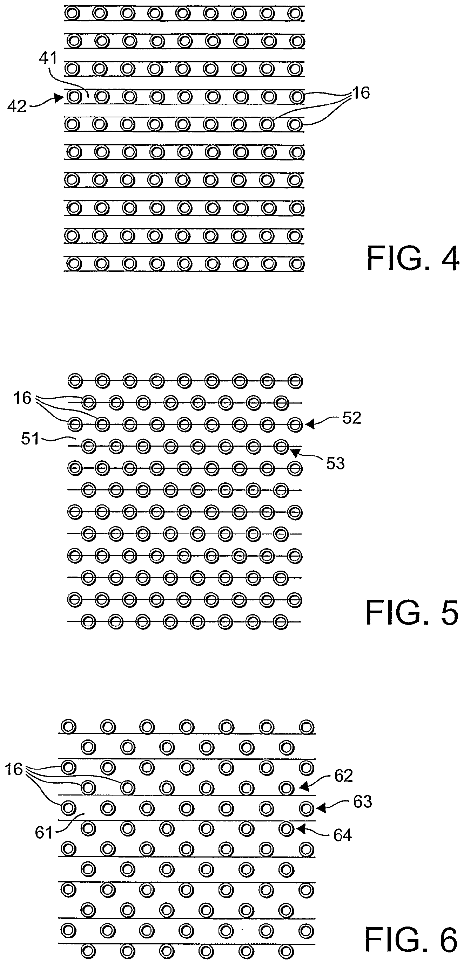

The sub-headers can be arranged in various ways in relation to the tubes 16. In Figure 4, each sub-header 41 is connected to a single row 42 of tubes 16. In Figure 5, each sub-header 51 is connected to two rows 52, 53 of tubes 16. In Figure 6, which corresponds to the arrangement shown in Figures 2 and 3, each sub-header 61 is connected to three rows 62, 63, 64 of tubes 16.

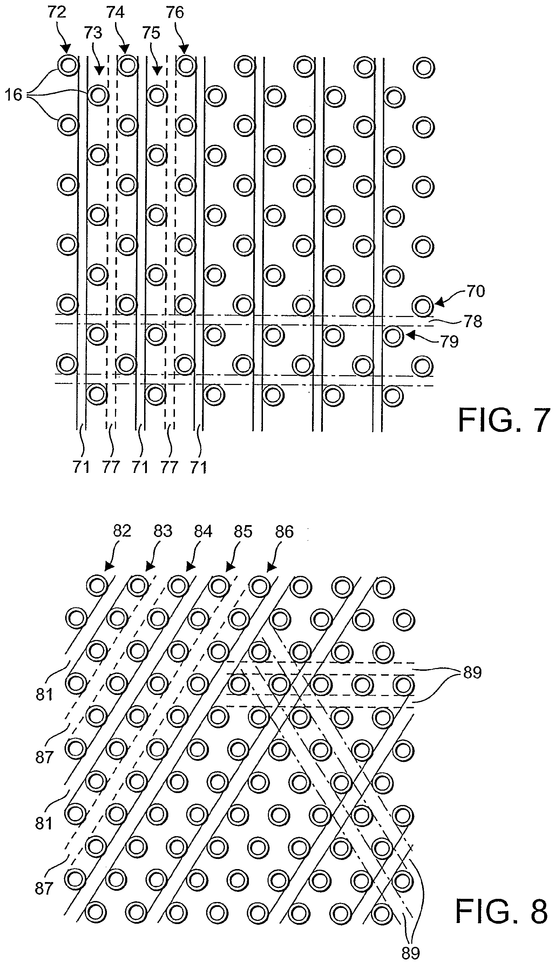

The tube bundle is strengthened and supported by tie rods in the stiffening zones 19 which are spaced vertically along the tubes 16. Figure 7 shows the arrangement at one particular vertical position in a stiffening zone 19. Each tie rod 71 is welded to two rows 72 and 73, 74 and 75 etc of tubes 16 but the tubes 16 in each row are only welded to one tie rod 71.

In order to connect all the tubes 16 together and so stiffen the bundle, another set of tie rods is welded to different pairs of rows of tubes at a different (but closely spaced) vertical position in the stiffening zone 19. One possible way in which the tie rods 74 might be positioned at the different vertical position is shown in broken lines in Figure 7. As can be seen, the tie rods 77 are welded to rows 73 and 74, 75 and 76 etc of the tubes 16 and so the tie rods 71 and 77 would be staggered and all the tubes 16 in the tube bundle would be connected together.

An alternative arrangement for a second set of tie rods is shown in chain lines in Figure 7. Here, the tie rods 78 are positioned in a direction transverse to the direction of the first set of tie rods 71 and are welded to completely different rows of tubes eg. 70,79.

It will be appreciated that these arrangements can be combined and interchanged within a single stiffening zone 19 or across more than one stiffening zone 19. In all cases, however, the cross-sectional restriction is minimised, by the avoidance of including all the necessary tie rods to interconnect all the tubes 16 at the same vertical position along the tubes.

While Figure 7 shows the tubes 16 on a square pitch, Figure 8 shows the tubes on a triangular pitch. Again, at the particular vertical position shown, the tie rods 81 are each welded to two rows 82 and 83, 84 and 85 etc of tubes 16 while each row of tie rods is welded to a single tie rod only.

At an adjacent spaced vertical position within the stiffening zone 19, in one arrangement, tie rods 87 are positioned as shown in broken lines in Figure 8, staggered with respect to the tie rods 81. Thus, the tubes 16 in the tube bundle are all connected together.

An alternative arrangement for the second set of tie rods 88 is shown in chain lines, and an arrangement for a third set 89 of tie rods at a third vertical position within the stiffening zone 19 is shown in dotted lines. As with the square pitch embodiment of Figure 7, these arrangements can be combined and interchanged and the cross-sectional obstruction is minimised in the same way.

## Claims

1. A slurry bubble column reactor (11) comprising a vessel in the form of a column having an inlet (12) and an outlet (14), and a heat exchange system comprising: a bundle of generally parallel heat exchange tubes (16) for transporting heat exchange fluid in the longitudinal direction of the column; a first header (24) at one end of the tube bundle (16) for supplying heat exchange fluid to or removing heat exchange fluid from the tubes; two or more first sub-headers (25) connected to the first header (24) via distribution conduits (26); a second header at the other end of the tube bundle, for removing heat exchange fluid from or supplying heat exchange fluid to the tubes (16), and one or more second sub- headers connected to the second header via distribution conduits, the second sub-headers also being connected to the tubes thereby connecting the second header to the tubes; the first sub-headers (25) also being connected to the tubes (16) thereby connecting the first header to the tubes; the first sub-headers being located at at least two different positions in the longitudinal direction of the tubes and being located at at least two different positions in the transverse direction of the tubes (16); the second sub-headers being located at at least two different positions in the longitudinal direction of the tubes and being located at at least two different positions in the transverse direction of the tubes.

2. A reactor as claimed in Claim 1, in which the tubes (16) are connected to each sub-header (25) arranged in a plurality of rows.

3. A reactor as claimed in Claims 1 or Claim 2, further comprising structural support members (71) arranged to support the heat exchange tubes (19).

4. A reactor as claimed in Claim 3, in which the support members (71) are arranged in a staggered formation at spaced positions in the longitudinal direction of the tubes (16).

5. A reactor as claimed in Claim 3 or Claim 4, in which the support members comprise tie-rods (71) attached to the tubes (16).

6. A reactor as claimed in Claim 5, in which: the tie rods (71) are arranged in a plurality of groups; all the tie rods (71) in each group extend in the same direction; and each group of tie rods (71) is located at a different position in the longitudinal direction of the tubes (16) to the other groups.

7. A reactor as claimed in Claim 6, in which the tie rods (71) in a group extend in a direction which is oblique to the direction in which the tie rods (16) in the next adjacent group extend.

8. A reactor as claimed in Claim 6 or Claim 7, in which the tie rods (71) in a group extend in the same direction as the tie rods in the next adjacent group but are transversely offset.

9. A reactor as claimed in any of Claims 6 to 8, in which the tie rods (71) in a group all lie in the same traverse plane.

10. A reactor as claimed in any of Claims 6 to 8, in which the groups are arranged in a series of group sets, the group sets being disposed at spaced locations in the longitudinal direction of the tubes.

11. A reactor as claimed in any preceding Claim, in which the heat exchange tubes (16) in the bundle are symmetrically distributed with a square, triangular or rotated square pitch formation.

12. A method of minimising cross sectional blockage in a slurry bubble column reactor (11) in which a plurality of heat exchange tubes (16) are arranged to transport coolant from one end of the reactor (11) to the other, the method comprising: arranging headers (24) and sub-headers (25) associated with the tubes in a staggered formation at positions along the longitudinal axis of the tubes (16), where the sub-headers (25) are connected to the header (24) via distribution conduits (26).

13. A method as claimed in Claim 12, in which: the tubes (16) are supported by tie rods (71); the tie rods are arranged in a plurality of groups; all the tie rods in each group extend in the same direction; and each group of tie rods is located at a different position in the longitudinal direction of the tubes to the other groups.

14. A method as claimed in Claim 12 or Claim 13, in which the tie rods (71) in a group extend in a direction which is oblique to the direction in which the tie rods in the next adjacent group extend.

15. A method as claimed in any of Claims 12 to 14, in which the tie rods (71) in a group extend in the same direction as the tie rods in the next adjacent group but are transversely offset.

16. A method as claimed in any of Claims 12 to 15, in which the tie rods (71) in a group all lie in the same traverse plane.

17. A method as claimed in any of Claims 12 to 16, in which the groups are arranged in a series of group sets, the group sets being disposed at spaced locations in the longitudinal direction of the tubes (16).

18. A method as claimed in any of Claims 12 to 17, further comprising conducting a chemical reaction in the slurry bubble column reactor (11) where reactants are supplied to the reactor via the inlet (12) and a product is removed via the outlet (14).

19. A method as claimed in Claim 18 in which the reaction is a Fischer-Tropsch synthesis, and the reactants comprise carbon monoxide and hydrogen.

20. A method is claimed in Claim 19, in which the reactor (11) contains a slurry including a product of the reaction in liquid form and a finely divided solid catalyst in suspension.

21. A method as claimed in Claim 20, in which the catalyst comprises a supported cobalt catalyst.

22. A method as claimed in Claim 21, in which the catalyst comprises cobalt on a metal oxide carrier.

23. A method as claimed in Claim 22, in which the metal oxide carrier is silica, titania and/or alumina.

24. A method as claimed in any of Claims 20 to 23, in which the catalyst particle size range is from 20 to 90 µm.

25. A method as claimed in any of Claims 20 to 24, in which the catalyst loading is in the range 50 to 400 kg/m³.

26. A method as claimed in any of Claims 19 to 25, in which the reaction temperature is in the range 190 to 250°C.

27. A method as claimed in any of Claims 19 to 26, in which the reactor pressure is in the range 15 to 30 bar.

28. A method as claimed in any of Claims 19 to 27, in which the H₂:CO ratio is in the range 1.4 to 2.2.

29. A method as claimed in any of Claims 19 to 28, in which the superficial gas velocity is in the range 5 to 30 cm/s.

30. A method as claimed in any of Claims 19 to 29, in which the slurry liquid medium comprises medium to higher hydrocarbons (C₁₀ to C₇₀).

## Patentansprüche

1. Blasensäulenreaktor (11), umfassend einen Behälter in Form einer Säule mit einem Einlass (12) und einem Auslass (14), und ein Wärmetauschsystem, umfassend: ein Bündel aus allgemein parallelen Wärmetauschrohren (16) zum Transportieren von Wärmeaustauschflüssigkeit in Längsrichtung der Säule; einen ersten Verteiler (24) an einem Ende des Rohrbündels (16) zum Zuführen von Wärmeaustauschflüssigkeit zu den Rohren oder Entfernen von Wärmeaustauschflüssigkeit von den Rohren; zwei oder mehr erste Unterverteiler (25), die mit dem ersten Verteiler (24) über Verteilungskanäle (26) verbunden sind; einen zweiten Verteiler am anderen Ende des Rohrbündels, zum Entfernen von Wärmeaustauschflüssigkeit von oder Zuführen von Wärmeaustauschflüssigkeit zu den Rohren (16), und ein oder mehr zweite Unterverteiler, die mit dem zweiten Verteiler über Verteilungskanäle verbunden sind, wobei die zweiten Unterverteiler auch mit den Rohren verbunden sind, wodurch sie den zweiten Verteiler mit den Rohren verbinden; wobei die ersten Unterverteiler (25) auch mit den Rohren (16) verbunden sind, wodurch sie den ersten Verteiler mit den Rohren verbinden; wobei die ersten Unterverteiler an zumindest zwei verschiedenen Positionen in der Längsrichtung der Rohre angeordnet sind und in zumindest zwei verschiedenen Positionen in der Querrichtung der Rohre (16) angeordnet sind; wobei die zweiten Unterverteiler in zumindest zwei verschiedenen Positionen in der Längsrichtung der Rohre angeordnet sind und in zumindest zwei verschiedenen Positionen in der Querrichtung der Rohre angeordnet sind.

2. Reaktor nach Anspruch 1, wobei die Rohre (16) mit jedem Unterverteiler (25) verbunden sind, die in einer Mehrzahl von Reihen angeordnet sind.

3. Reaktor nach Anspruch 1 oder Anspruch 2, ferner umfassend strukturelle Stützelemente (71), die zur Unterstützung der Wärmetauschrohre (19) angeordnet sind.

4. Reaktor nach Anspruch 3, wobei die Stützelemente (71) in einer versetzten Anordnung an beabstandeten Positionen in der Längsrichtung der Rohre (16) angeordnet sind.

5. Reaktor nach Anspruch 3 oder Anspruch 4, wobei die Stützelemente Verbindungsstangen (71) umfassen, die an den Rohren (16) befestigt sind.

6. Reaktor nach Anspruch 5, wobei: die Verbindungsstangen (71) in einer Vielzahl von Gruppen angeordnet sind; sich alle Verbindungsstangen (71) in jeder Gruppe in die gleiche Richtung erstrecken; und jede Gruppe von Verbindungsstangen (71) an einer zu den anderen Gruppen unterschiedlichen Position in der Längsrichtung der Rohre (16) angeordnet ist.

7. Reaktor nach Anspruch 6, wobei sich die Verbindungsstangen (71) in einer Gruppe in eine Richtung erstrecken, die schräg zu der Richtung ist, in der sich die Verbindungsstangen (16) in der nächsten benachbarten Gruppe erstrecken.

8. Reaktor nach Anspruch 6 oder Anspruch 7, wobei sich die Verbindungsstangen (71) in einer Gruppe in die gleiche Richtung erstrecken wie die Verbindungsstangen in der nächsten benachbarten Gruppe, aber quer versetzt sind.

9. Reaktor nach einem der Ansprüche 6 bis 8, wobei die Verbindungsstangen (71) in einer Gruppe alle in der gleichen Querebene liegen.

10. Reaktor nach einem der Ansprüche 6 bis 8, wobei die Gruppen in einer Reihe von Gruppensätzen angeordnet sind, wobei die Gruppensätze an beabstandeten Stellen in der Längsrichtung der Rohre angeordnet sind.

11. Reaktor nach einem der vorhergehenden Ansprüche, wobei die Wärmetauschrohre (16) im Bündel symmetrisch verteilt sind mit einer quadratischen, dreieckigen oder gedreht quadratischen Steigungsanordnung.

12. Verfahren zum Minimieren einer Querschnittsblockade in einem Blasensäulenreaktor (11), in dem eine Mehrzahl von Wärmetauschrohren (16) angeordnet ist, um Kühlmittel von einem Ende des Reaktors (11) zum anderen zu transportieren, wobei das Verfahren das Folgende umfasst:
Anordnen von Verteilern (24) und Unterverteilern (25), die mit den Rohren in Zusammenhang stehen, in einer versetzten Anordnung an Positionen entlang der Längsachse der Rohre (16), wo die Unterverteiler (25) mit dem Verteiler (24) über Verteilungskanäle (26) verbunden sind.

13. Verfahren nach Anspruch 12, wobei: die Rohre (16) von Verbindungsstangen (71) unterstützt werden; die Verbindungsstangen in einer Vielzahl von Gruppen angeordnet sind; sich alle Verbindungsstangen in jeder Gruppe in die gleiche Richtung erstrecken; und jede Gruppe von Verbindungsstangen an einer zu den anderen Gruppen unterschiedlichen Position in der Längsrichtung der Rohre angeordnet ist.

14. Verfahren nach Anspruch 12 oder Anspruch 13, wobei sich die Verbindungsstangen (71) in einer Gruppe in eine Richtung erstrecken, die schräg zu der Richtung ist, in der sich die Verbindungsstangen in der nächsten benachbarten Gruppe erstrecken.

15. Verfahren nach einem der Ansprüche 12 bis 14, wobei sich die Verbindungsstangen (71) in einer Gruppe in die gleiche Richtung erstrecken wie die Verbindungsstangen in der nächsten benachbarten Gruppe, aber quer versetzt sind.

16. Verfahren nach einem der Ansprüche 12 bis 15, wobei die Verbindungsstangen (71) in einer Gruppe alle in der gleichen Querebene liegen.

17. Verfahren nach einem der Ansprüche 12 bis 16, wobei die Gruppen in einer Reihe von Gruppensätzen angeordnet sind, wobei die Gruppensätze an beabstandeten Stellen in der Längsrichtung der Rohre (16) angeordnet sind.

18. Verfahren nach einem der Ansprüche 12 bis 17, ferner umfassend das Durchführen einer chemischen Reaktion im Blasensäulenreaktor (11), wobei dem Reaktor Reaktionspartner über den Einlass (12) zugeführt werden und ein Produkt über den Auslass (14) entnommen wird.

19. Verfahren nach Anspruch 18, wobei die Reaktion eine Fischer-Tropsch-Synthese ist und die Reaktionspartner Kohlenmonoxid und Wasserstoff umfassen.

20. Verfahren nach Anspruch 19, wobei der Reaktor (11) eine Aufschlämmung enthält, die ein Produkt der Reaktion in flüssiger Form und einen fein verteilten festen Katalysator in Suspension umfasst.

21. Verfahren nach Anspruch 20, wobei der Katalysator einen unterstützten Kobaltkatalysator umfasst.

22. Verfahren nach Anspruch 21, wobei der Katalysator Kobalt auf einem Metalloxidträger umfasst.

23. Verfahren nach Anspruch 22, wobei der Metalloxidträger Siliciumdioxid, Titandioxid und/oder Aluminiumoxid ist.

24. Verfahren nach einem der Ansprüche 20 bis 23, wobei der Partikelgrößenbereich des Katalysators 20 bis 90 µm beträgt.

25. Verfahren nach einem der Ansprüche 20 bis 24, wobei die Beladung des Katalysators im Bereich 50 bis 400 kg/m³ liegt.

26. Verfahren nach einem der Ansprüche 19 bis 25, wobei die Reaktionstemperatur im Bereich von 190 bis 250°C liegt.

27. Verfahren nach einem der Ansprüche 19 bis 26, wobei der Reaktordruck im Bereich von 15 bis 30 bar liegt.

28. Verfahren nach einem der Ansprüche 19 bis 27, wobei das H₂:CO-Verhältnis im Bereich von 1,4 bis 2,2 liegt.

29. Verfahren nach einem der Ansprüche 19 bis 28, wobei die Oberflächengasgeschwindigkeit im Bereich von 5 bis 30 cm/s liegt.

30. Verfahren nach einem der Ansprüche 19 bis 29, wobei das flüssige Aufschlämmungsmedium mittlere bis höhere Kohlenwasserstoffe (C₁₀ bis C₇₀) umfasst.

## Revendications

1. Réacteur à colonne à bulles de type bouillie (11) comprenant une cuve sous la forme d'une colonne ayant une entrée (12) et une sortie (14), et un système d'échange de chaleur comprenant : un faisceau de tubes d'échange de chaleur généralement parallèles (16) pour transporter un fluide d'échange de chaleur dans la direction longitudinale de la colonne ; un premier collecteur (24) à une extrémité du faisceau de tubes (16) pour fournir un fluide d'échange de chaleur aux ou retirer un fluide d'échange de chaleur des tubes ; au moins deux premiers sous-collecteurs (25) reliés au premier collecteur (24) par le biais de conduites de distribution (26) ; un deuxième collecteur à l'autre extrémité du faisceau de tubes, pour retirer un fluide d'échange de chaleur des ou fournir un fluide d'échange de chaleur aux tubes (16), et un ou plusieurs deuxièmes sous-collecteurs reliés au deuxième collecteur par le biais de conduites de distribution, les deuxièmes sous-collecteurs étant également reliés aux tubes, reliant ainsi le deuxième collecteur aux tubes ; les premiers sous-collecteurs (25) étant également reliés aux tubes (16), reliant ainsi le premier collecteur aux tubes ; les premier sous-collecteurs étant situés à au moins deux positions différentes dans la direction longitudinale des tubes et étant situés à au moins deux positions différentes dans la direction transversale des tubes (16) ; les deuxièmes sous-collecteurs étant situés à au moins deux positions différentes dans la direction longitudinale des tubes et étant situés à au moins deux positions différentes dans la direction transversale des tubes.

2. Réacteur selon la revendication 1, dans lequel les tubes (16) sont reliés à chaque sous-collecteur (25) disposé dans une pluralité de rangées.

3. Réacteur selon la revendication 1 ou la revendication 2, comprenant en outre des éléments structuraux de support (71) disposés pour supporter les tubes d'échange de chaleur (19).

4. Réacteur selon la revendication 3, dans lequel les éléments de support (71) sont disposés dans une formation en quinconce à des positions espacées dans la direction longitudinale des tubes (16).

5. Réacteur selon la revendication 3 ou la revendication 4, dans lequel les éléments de support comprennent des tirants (71) attachés aux tubes (16).

6. Réacteur selon la revendication 5, dans lequel : les tirants (71) sont disposés dans une pluralité de groupes ; tous les tirants (71) dans chaque groupe s'étendent dans la même direction ; et chaque groupe de tirants (71) est situé, dans la direction longitudinale des tubes (16), à une position différente de celle des autres groupes.

7. Réacteur selon la revendication 6, dans lequel les tirants (71) dans un groupe s'étendent dans une direction qui est oblique par rapport à la direction dans laquelle s'étendent les tirants (16) dans le groupe adjacent suivant.

8. Réacteur selon la revendication 6 ou la revendication 7, dans lequel les tirants (71) dans un groupe s'étendent dans la même direction que les tirants dans le groupe adjacent suivant, mais sont décalés transversalement.

9. Réacteur selon l'une quelconque des revendications 6 à 8, dans lequel les tirants (71) dans un groupe se situent tous dans le même plan transversal.

10. Réacteur selon l'une quelconque des revendications 6 à 8, dans lequel les groupes sont disposés dans une série d'ensembles de groupes, les ensembles de groupes étant disposés à des emplacements espacés dans la direction longitudinale des tubes.

11. Réacteur selon une quelconque revendication précédente, dans lequel les tubes d'échange de chaleur (16) dans le faisceau sont distribués symétriquement avec une formation à pas carré, triangulaire ou carré tourné.

12. Procédé de minimisation des bouchons transversaux dans un réacteur à colonne à bulles de type bouillie (11) dans lequel une pluralité de tubes d'échange de chaleur (16) sont disposés pour transporter un réfrigérant d'une extrémité du réacteur (11) à l'autre, le procédé comprenant :
la mise en place de collecteurs (24) et de sous-collecteurs (25) associés aux tubes dans une formation en quinconce à des positions le long de l'axe longitudinal des tubes (16), les sous-collecteurs (25) étant reliés au collecteur (24) par le biais de conduites de distribution (26).

13. Procédé selon la revendication 12, dans lequel : les tubes (16) sont supportés par des tirants (71) ; les tirants sont disposés dans une pluralité de groupes ; tous les tirants dans chaque groupe s'étendent dans la même direction ; et chaque groupe de tirants est situé, dans la direction longitudinale des tubes, à une position différente de celle des autres groupes.

14. Procédé selon la revendication 12 ou la revendication 13, dans lequel les tirants (71) dans un groupe s'étendent dans une direction qui est oblique par rapport à la direction dans laquelle s'étendent les tirants dans le groupe adjacent suivant.

15. Procédé selon l'une quelconque des revendications 12 à 14, dans lequel les tirants (71) dans un groupe s'étendent dans la même direction que les tirants dans le groupe adjacent suivant, mais sont décalés transversalement.

16. Procédé selon l'une quelconque des revendications 12 à 15, dans lequel les tirants (71) dans un groupe se situent tous dans le même plan transversal.

17. Procédé selon l'une quelconque des revendications 12 à 16, dans lequel les groupes sont disposés dans une série d'ensembles de groupes, les ensembles de groupes étant disposés à des emplacements espacés dans la direction longitudinale des tubes (16).

18. Procédé selon l'une quelconque des revendications 12 à 17, comprenant en outre la conduite d'une réaction chimique dans le réacteur à colonne à bulles de type bouillie (11) où des réactifs sont introduits dans le réacteur par l'entrée (12) et un produit est retiré par la sortie (14).

19. Procédé selon la revendication 18 dans lequel la réaction est une synthèse de Fischer-Tropsch, et les réactifs comprennent du monoxyde de carbone et de l'hydrogène.

20. Procédé selon la revendication 19, dans lequel le réacteur (11) contient une bouillie comportant un produit de la réaction sous forme liquide et un catalyseur solide finement divisé en suspension.

21. Procédé selon la revendication 20, dans lequel le catalyseur comprend un catalyseur au cobalt sur support.

22. Procédé selon la revendication 21, dans lequel le catalyseur comprend du cobalt sur un support d'oxyde métallique.

23. Procédé selon la revendication 22, dans lequel le support d'oxyde métallique est de la silice, du dioxyde de titane et/ou de l'alumine.

24. Procédé selon l'une quelconque des revendications 20 à 23, dans lequel la taille de particules du catalyseur va de 20 à 90 µm.

25. Procédé selon l'une quelconque des revendications 20 à 24, dans lequel la charge en catalyseur se situe dans la gamme de 50 à 400 kg/m³.

26. Procédé selon l'une quelconque des revendications 19 à 25, dans lequel la température de réaction se situe dans la gamme de 190 à 250 °C.

27. Procédé selon l'une quelconque des revendications 19 à 26, dans lequel la pression du réacteur se situe dans la gamme de 15 à 30 bar.

28. Procédé selon l'une quelconque des revendications 19 à 27, dans lequel le rapport H₂:CO se situe dans la gamme de 1,4 à 2,2.

29. Procédé selon l'une quelconque des revendications 19 à 28, dans lequel la vitesse superficielle du gaz se situe dans la gamme de 5 à 30 cm/s.

30. Procédé selon l'une quelconque des revendications 19 à 29, dans lequel le milieu liquide de la bouillie comprend des hydrocarbures moyens à plus lourds (C₁₀ à C₇₀).
